# EUROPÄISCHE PATENTSCHRIFT

(11) **EP 4 203 256 B1**
(45) Veröffentlichungstag und Bekanntmachung des Hinweises auf die Patenterteilung: **06.11.2024**
(21) Anmeldenummer: 21217166.4
(22) Anmeldetag: 22.12.2021
(51) Int. Cl.: H02K 3/28

(54) **STATOR FÜR EINE ELEKTRISCHE MASCHINE, ELEKTRISCHE MASCHINE UND FAHRZEUG**
STATOR FOR AN ELECTRIC MACHINE, ELECTRIC MACHINE AND VEHICLE
STATOR POUR UNE MACHINE ÉLECTRIQUE, MACHINE ÉLECTRIQUE ET VÉHICULE

(43) Veröffentlichungstag der Anmeldung: 28.06.2023
(73) Patentinhaber: Valeo eAutomotive Germany GmbH, 91056 Erlangen (DE)
(72) Erfinder: Siepker, Carsten, 97616 Bad Neustadt a.d.Saale (DE)
(74) Vertreter: Valeo Powertrain Systems

(56) Entgegenhaltungen:
- CN-A- 109 038 878
- US-A1- 2003 214 196
- US-A1- 2018 309 337
- US-A1- 2020 067 362

## Beschreibung

Die vorliegende Erfindung betrifft einen Stator für eine elektrische Maschine, aufweisend einen Statorkern, welcher eine Längsachse, eine Stirnseite, eine der Stirnseite gegenüberliegende weitere Stirnseite und eine Vielzahl von in Umfangsrichtung angeordneten Nuten, die sich von der Stirnseite zur weiteren Stirnseite erstrecken, aufweist, und eine Statorwicklung, die eine Anzahl N Stränge aufweist, wobei N ≥ 3, wobei jeder Strang durch Formleiter ausgebildet ist, die innerhalb der Nuten angeordnete Beinabschnitte und Verbindungsabschnitte, die jeweils zwei der Beinabschnitte an den Stirnseiten elektrisch leitfähig miteinander verbinden, aufweisen, wobei jede Nut radial in erste bis L-te Lagen untergliedert ist, die nach ihrer Reihenfolge in Radialrichtung benannt sind, wobei die Lagen erste bis (L/2)-te Doppellagen ausbilden, wobei die i-te Doppellage die (2i-1)-te und die (2i)-te Lage für alle natürlichen Zahlen 1 ≤ i ≤ (L/2) umfasst, wobei L ≥ 4 und gerade ist, wobei L und i natürliche Zahlen sind, wobei jede Lage in einer jeweiligen Nut einen Aufnahmeplatz bildet, in dem einer der Beinabschnitte angeordnet ist, wobei die Aufnahmeplätze für einen jeweiligen Strang eine Anzahl 2·P Wicklungszonen ausbilden und in einer jeweiligen Wicklungszone die Beinabschnitte von den Strang ausbildenden Formleitern beim Anlegen einer N-phasigen Wechselspannung an die Statorwicklung in dieselbe Stromrichtung durchflossen werden, wobei 2·P ≥ 6, wobei P eine natürliche Zahl ist, wobei jede Wicklungszone in jeder der Lagen jeweils eine Anzahl q ≥ 2 Aufnahmeplätze umfasst, wobei q eine natürliche Zahl ist.

Daneben betrifft die Erfindung eine elektrische Maschine und ein Fahrzeug.

Aus dem Artikel Lindner, Mathias; Moritz, Philipp; Jung, Jakob: "Hairpin-Wicklungen für elektrische Fahrantriebe" in: 2. Freiberger Kolloquium Elektrische Antriebstechnik, Freiberg 2019, Seiten 140 bis 154 sind Statoren mit Hairpin-Wicklungen bekannt, bei denen einzelne Lagen durch Verschiebung gegeneinander, durch Blockschichtung, symmetrische Schichtung oder wechselseitige Schichtung gesehnt sind.

Bei Statoren mit einer Statorwicklung, deren Stränge durch Formleiter ausgebildet sind, wird eine möglichst geringe Drehmomentwelligkeit gewünscht, insbesondere wenn diese für einen Einsatz in einem Fahrantrieb vorgesehen sind. Dies erfordert eine Verringerung harmonischer Wicklungsfaktoren. Grundsätzlich wird dabei ein möglichst sinusförmiges Luftspaltfeld angestrebt. Dazu sind die Stränge so in Aufnahmeplätzen für die Formleiter anzuordnen, dass die Wicklungsfaktoren für harmonische Komponenten möglichst gering und für die Fundamentalkomponente möglichst hoch sind. Die Dokumente US 2018/309337 und US 2003/214196 offenbaren Statoren gemäß dem Stand der Technik.

Der Erfindung liegt die Aufgabe zugrunde, eine Möglichkeit zum Betrieb einer elektrischen Maschine mit einer aus Formleitern gebildeten Statorwicklung mit einer geringen Drehmomentwelligkeit anzugeben.

Zur Lösung dieser Aufgabe ist erfindungsgemäß bei einem Stator der eingangs genannten Art vorgesehen, dass innerhalb einer Anzahl A von Doppellagen einer jeweiligen Wicklungszone die Aufnahmeplätze mit einer in Umfangsrichtung benachbarten Wicklungszone eines anderen der Stränge derart verschachtelt sind, dass die Beinabschnitte des anderen Strangs in Umfangsrichtung beidseitig von zwei in der Doppellage angeordneten Beinabschnitten der jeweiligen Wicklungszone umgeben sind, wobei 1 ≤ A ≤ (L/2)-1 ist, wobei A eine natürliche Zahl ist. Der erfindungsgemäße Stator für eine elektrische Maschine weist einen Statorkern auf. Der Statorkern weist eine Längsachse auf. Der Statorkern weist ferner eine Stirnseite auf. Der Statorkern weist ferner eine weitere Stirnseite auf. Die weitere Stirnseite liegt der Stirnseite gegenüber. Der Stator weist ferner eine Vielzahl von Nuten auf. Die Nuten sind in Umfangsrichtung angeordnet. Die Nuten erstrecken sich von der Stirnseite zur weiteren Stirnseite. Der Stator weist ferner eine Statorwicklung auf. Die Statorwicklung weist eine Anzahl N Stränge auf, wobei N ≥ 3. Jeder Strang ist durch Formleiter ausgebildet. Die Formleiter weisen innerhalb der Nuten angeordnete Beinabschnitte auf. Die Formleiter weisen ferner Verbindungsabschnitte auf. Die Verbindungsabschnitte verbinden jeweils zwei der Beinabschnitte an den Stirnseiten elektrisch leitfähig miteinander. Jede Nut ist radial in erste bis L-te Lagen untergliedert. Die Lagen sind nach ihrer Reihenfolge in Radialrichtung benannt. Die Lagen bilden erste bis (L/2)-te Doppellagen aus. Die i-te Doppellage umfasst die (2i-1)-te und die (2i)-te Lage für alle natürlichen Zahlen 1 ≤ i ≤ (L/2), wobei L ≥ 4 und gerade ist. L und i sind natürliche Zahlen. Jede Lage in einer jeweiligen Nut bildet einen Aufnahmeplatz. In dem Aufnahmeplatz ist einer der Beinabschnitte angeordnet. Die Aufnahmeplätze für einen jeweiligen Strang bilden eine Anzahl 2 P Wicklungszonen aus. In einer jeweiligen Wicklungszone werden die Beinabschnitte von den Strang ausbildenden Formleitern beim Anlegen einer N-phasigen Wechselspannung an die Statorwicklung in dieselbe Stromrichtung durchflossen, wobei 2·P ≥ 6. P ist eine natürliche Zahl. Jede Wicklungszone umfasst in jeder der Lagen jeweils eine Anzahl q ≥ 2 Aufnahmeplätze. q ist eine natürliche Zahl. Innerhalb einer Anzahl A von Doppellagen einer jeweiligen Wicklungszone sind die Aufnahmeplätze mit einer in Umfangsrichtung benachbarten Wicklungszone eines anderen der Stränge verschachtelt. Sie sind derart verschachtelt (engl. interlaced), dass die Beinabschnitte des anderen Strangs in Umfangsrichtung beidseitig von zwei in der Doppellage angeordneten Beinabschnitten der jeweiligen Wicklungszone umgeben sind, wobei 1 ≤ A ≤ (L/2)-1 ist. A ist eine natürliche Zahl.

Die Erfindung beruht auf der Erkenntnis, dass sich ein an eine Sinusform angenähertes Luftspaltfeld durch eine verschachtelte Anordnung der Wicklungszonen in wenigstens einer der Doppellagen erreichen lässt. In dieser Doppellage kann sich die Gestalt der Wicklungszone also von den übrigen [(L/2)-A] Doppellagen unterscheiden. Die verschachtelte Ausgestaltung ermöglicht es zudem, innerhalb der verschachtelten Doppellagen einen Wicklungsüberhang - im Sinne einer axialen Erstreckung der Verbindungsabschnitte - an einer der Stirnseiten gering zu halten.

Der Statorkern ist insbesondere aus einer Vielzahl axial geschichtet angeordneter und/oder gegeneinander elektrisch isolierter Einzelbleche gebildet. Der Statorkern kann insoweit auch als Statorblechpaket erachtet bzw. bezeichnet werden. Die Nuten erstrecken typischerweise axial innerhalb des Statorkerns. Die Anzahl der Stränge beträgt bevorzugt genau drei oder genau sechs.

Die Formleiter umfassen vorzugsweise Formleiter erster Art, die zwei Beinabschnitte und einen die zwei Beinabschnitte an der Stirnseite verbindenden Verbindungsabschnitt aufweisen. An der weiteren Stirnseite können sich an einen jeweiligen Beinabschnitt der Formleiter erster Art freie Enden anschließen, die jeweils mit einem freien Ende eines anderen Formleiters, bevorzugt stoffschlüssig, elektrisch leitfähig verbunden sind, sodass die verbundenen freien Enden einen Verbindungsabschnitt an der weiteren Stirnseite ausbilden. Die freien Enden der Formleiter erster Art können in Umfangsrichtung voneinander wegweisen. Die Formleiter können ferner Formleiter zweiter Art umfassen, die den Formleiter erster Art entsprechen, bei denen die freien Enden jedoch in dieselbe Umfangsrichtung weisen. Die Formleiter können ferner Formleiter dritter Art umfassen, die einen Beinabschnitt, ein freies Ende an der Stirnseite und ein freies Ende an der weiteren Stirnseite aufweisen. Die Formleiter dritter Art dienen zum Anschließen der Statorwicklung und bilden jeweils mit einem Formleiter erster Art an der weiteren Stirnseite einen Verbindungsabschnitt aus.

Die Anzahl der Lagen beträgt bevorzugt höchstens sechzehn, besonderes bevorzugt höchstens zwölf. In bevorzugten Ausgestaltungen ist L genau gleich sechs oder genau gleich acht oder genau gleich zehn. Die erste Lage kann die radial äußerste oder die radial innerste der Lagen sein.

Die Anzahl der Wicklungszonen für einen jeweiligen Strang kann der Anzahl der Pole der Statorwicklung entsprechen. 2·P beträgt bevorzugt höchstens sechzehn, besonderes bevorzugt höchstens zwölf. In bevorzugten Ausgestaltungen ist 2·P genau gleich sechs oder genau gleich acht oder genau gleich zehn.

q kann auch als Lochzahl der Statorwicklung bezeichnet werden. q beträgt bevorzugt höchstens sechs, besonders bevorzugt höchstens vier. In besonderes bevorzugten Ausgestaltungen ist q genau gleich zwei oder genau gleich drei oder genau gleich vier.

In bevorzugter Ausgestaltung des erfindungsgemäßen Stators sind die Aufnahmeplätze zumindest innerhalb der ersten oder der (L/2)-ten Doppellage verschachtelt.

Es kann ferner vorgesehen sein, dass sich die jeweilige Wicklungszone innerhalb der [(L/2)-A] übrigen Doppellagen jeweils über genau q Nuten erstreckt. Mit anderen Worten können die Wicklungszonen in den [(L/2)-A] übrigen Doppellagen unverschachtelt sein bzw. sich über genau q unmittelbar benachbarte Nuten erstrecken. Dies hat den Vorteil, dass nur an einer Radialposition in einer Nut Aufnahmeplätze unterschiedlicher Stränge aneinandergrenzen und sog. Phasengrenzen ausbilden. Dies erleichtert Schutzmaßnahmen gegen elektrische Durchschläge zwischen unterschiedlichen Phasen, da diese nur an der vorgenannten Radialposition erforderlich sind.

In konkreter Ausgestaltung kann vorgesehen sein, dass erste bis (2·N·P·q)-te Nuten vorgesehen sind, die entsprechend in der Reihenfolge in Umfangsrichtung benannt sind, wobei sich für einen der Stränge die Aufnahmeplätze innerhalb der Doppellagen, in denen die Aufnahmeplätze verschachtelt sind, in der (q+1)-ten Nut und der (2-N-P-q)-ten Nut sowie in der (x-q-N)-ten Nut und der [(x-q-N)+q+1]-ten Nut für alle natürlichen Zahlen 1 ≤ x ≤ [(2·P)-1] befinden und die Aufnahmeplätze innerhalb der [(L/2)-A] Doppellagen, in den sich die jeweilige Wicklungszone über genau q Nuten erstreckt, in den x-ten bis (x+q-1)-ten Nuten befinden, für alle natürlichen Zahlen 1 ≤ x ≤ [(2·P)-1].

Ferner kann vorgesehen sein, dass q ≥ 3 ist und sich für den Strang die Aufnahmeplätze innerhalb der Doppellagen, in denen die Aufnahmeplätze verschachtelt sind, auch in der zweiten bis (q-1)-ten Nut sowie in der [(x·q·N)+2]-ten bis [(x·q·N)+q-1]-ten Nut befinden.

Für die weiteren Stränge können die Aufnahmeplätzte jeweils um q Nuten in Umfangsrichtung versetzt angeordnet sein.

In bevorzugter Ausgestaltung des erfindungsgemäßen Stators bildet die Statorwicklung eine Wellenwicklung aus. Eine solche Statorwicklung ist hinsichtlich der Ausgestaltung der Verbindungsabschnitte an der Stirnseite geometrisch einfach realisierbar.

Mit besonderem Vorteil kann vorgesehen sein, dass eine axiale Erstreckung von Verbindungsabschnitten, die in den verschachtelten Aufnahmeplätzen angeordnete Beinabschnitte an der Stirnseite verbinden, geringer als von Verbindungsabschnitten ist, die in den Aufnahmeplätzen der [(L/2)-A] übrigen Doppellagen angeordnete Beinabschnitte an der Stirnseite verbinden. Mit anderen Worten ist in den verschachtelten Doppellagen ein geringerer Wicklungsüberhang als in den übrigen Doppellagen vorgesehen. Bildlich gesprochen kann ein durch die Verbindungsabschnitte an der Stirnseite ausgebildeter Wicklungskopf entlang der Radialrichtung eine gestufte axiale Erstreckung aufweisen. Dies ermöglicht insbesondere eine verbesserte Kühlbarkeit des Wicklungskopfs, wenn eine Sprühkühlung vorgesehen ist, und stellt zusätzlichen Raum die Anordnung von Anschlüssen der Statorwicklung bereit.

Besonders bevorzugt ist ferner eine axiale Erstreckung von Verbindungsabschnitten, die in den Aufnahmeplätzen einer der [(L/2)-A] übrigen Doppellagen angeordnete Beinabschnitte an der Stirnseite verbinden, geringer als von Verbindungsabschnitten ist, die in den Aufnahmeplätzen einer anderen der [(L/2)-A] übrigen Doppellagen angeordnete Beinabschnitte an der Stirnseite verbinden. Insbesondere liegen die Aufnahmeplätze der anderen der [(L/2)-A] übrigen Doppellagen radial zwischen der verschachtelten Doppellage oder den A verschachtelten Doppellagen und den Aufnahmeplätzen der einen der [(L/2)-A] übrigen Doppellagen.

Bei dem erfindungsgemäßen Stator kann jeder Strang mehrere Strompfade aufweisen, die jeweils eine Reihenschaltung von ersten bis L-ten Leiterfolgen aus mehreren in Reihe geschalteten Beinabschnitten aufweisen, wobei die Leiterfolgen entsprechend ihrer Reihenfolge entlang der Reihenschaltung benannt sind. Die Reihenschaltung erfolgt vorzugsweise abwechselnd durch an der Stirnseite und der weiteren Stirnseite angeordnete Verbindungsabschnitte.

Bevorzugt ist vorgesehen, dass die Beinabschnitte einer jeweiligen Leiterfolge in einer einzigen Doppellage angeordnet sind und entlang des Strompfads die Lagen der Doppellage wechseln.

In vorteilhafter Ausgestaltung erstrecken sich die ersten bis (L/2)-ten Leiterfolgen entlang einer vorgegebenen ersten Umfangsrichtung um den Statorkern. Die [(L/2)+1]-ten bis L-ten Leiterfolgen können sich entlang einer der ersten Umfangsrichtung entgegengesetzten zweiten Umfangsrichtung um den Statorkern erstrecken. Der Strompfad bilden so einen Richtungswechsel bezüglich der Umfangsrichtung aus. Es kann vorgesehen sein, dass von der Stirnseite aus betrachtet die erste Umfangsrichtung der Gegenuhrzeigersinn ist und die zweite Umfangsrichtung der Uhrzeigersinn ist. Alternativ kann von der Stirnseite aus betrachtet die erste Umfangsrichtung der Uhrzeigersinn und die zweite Umfangsrichtung der Gegenuhrzeigersinn sein.

Es kann ferner vorgesehen sein, dass die bezüglich der Reihenschaltung unmittelbar aufeinander folgenden Beinabschnitte der (L/2)-ten Leiterfolge und der [(L/2)+1]-ten Leiterfolge in derselben Lage, insbesondere der ersten Lage oder der L-ten Lage, angeordnet sind. Mit anderen Worten sind der bezüglich der Reihenschaltung letzte Beinabschnitt der (L/2)-ten Leiterfolge und erste Beinabschnitt der [(L/2)+1]-ten Leiterfolge in derselben Lage angeordnet.

Bevorzugt ist jede Wicklungszone in erste bis q-te Teilwicklungszonen untergliedert ist, die sich jeweils über alle Lagen erstrecken und entsprechend ihrer Reihenfolge in Umfangsrichtung benannt sind. Jede Leiterfolge belegt vorzugsweise alle Teilwicklungszonen. Dabei können durch einen an der weiteren Stirnseite angeordneten Verbindungsabschnitt verbundene Beinabschnitte in derselben Teilwicklungszone angeordnet sein und/oder durch einen an der Stirnseite angeordneten Verbindungsabschnitt verbundene Beinabschnitte der Leiterfolge in unterschiedlichen Teilwicklungszonen angeordnet sein. Bevorzugt sind bezüglich der Reihenschaltung unmittelbar aufeinanderfolgende Beinabschnitte unterschiedlicher Leiterfolgen in derselben Teilwicklungszone angeordnet und/oder durch an der Stirnseite angeordnete Verbindungsabschnitte verbunden.

In konkreter Weiterbildung kann vorgesehen sein, dass jede Leiterfolge erste bis (2·P)-te Beinabschnitte umfasst, die entsprechend ihrer Reihenfolge entlang der Reihenschaltung benannt sind. Dabei ist es bevorzugt, dass bei den ungeradzahlig benannten Leiterfolgen die [(j·2·P/q)+1]-ten bis [(j+1)·2·P/q]-ten Beinabschnitte in den (j+1)-ten Teilwicklungszone angeordnet sind, für alle ganzen Zahlen 0 ≤ j ≤ (q-1). Alternativ oder zusätzlich kann vorgesehen sein, dass bei den geradzahlig benannten Leiterfolgen die [(k·2·P/q)+1]-ten bis [(k+1)·2·P/q]-ten Beinabschnitte in den (q-k)-ten Teilwicklungszone angeordnet sind, für alle ganzen Zahlen 0 ≤ k ≤ (q-1).

Bevorzugt sind die durch an der Stirnseite angeordnete Verbindungsabschnitte verbundenen Beinabschnitte, die in der oder A Doppellagen, innerhalb derer die Aufnahmeplätze verschachtelt sind, angeordnet sind, weniger als N·q Nuten, insbesondere in N·q-2 Nuten, voneinander entfernt. Bevorzugt sind die durch an der Stirnseite angeordnete Verbindungsabschnitte verbundenen Beinabschnitte der ersten Leiterfolge und/oder der L-ten Leiterfolge weniger als N·q Nuten, insbesondere in N·q-1 Nuten, voneinander entfernt. Bevorzugt sind die durch an der Stirnseite angeordnete Verbindungsabschnitte verbundenen Beinabschnitte der zweiten Leiterfolge und/oder der (L-1)-ten Leiterfolge mehr als N·q Nuten, insbesondere in N·q+1 Nuten, voneinander entfernt.

Bevorzugt sind die bezüglich der Reihenschaltung unmittelbar aufeinanderfolgenden Beinabschnitte der ersten und der zweiten Leiterfolge und/oder der (L-1)-ten und der L-ten Leiterfolge N·q Nuten voneinander entfernt. Bevorzugt sind die bezüglich der Reihenschaltung unmittelbar aufeinanderfolgenden Beinabschnitte der [(L/2)-1]-ten und der (L/2)-ten Leiterfolge und/oder der [(L/2)+1]-ten und der [(L/2)+2]-ten Leiterfolge mehr als N·q Nuten, insbesondere N·q+1 Nuten voneinander entfernt. Bevorzugt sind die bezüglich der Reihenschaltung unmittelbar aufeinanderfolgenden Beinabschnitte der (L/2)-ten und der [(L/2)+1]-ten Leiterfolge N·q Nuten voneinander entfernt.

Bevorzugt verbinden die an der weiteren Stirnseite angeordneten Verbindungsabschnitte Formleiter, die in N·q Nuten voneinander entfernten Aufnahmeplätzen angeordnet sind. Dadurch kann ein einheitlicher Wicklungsüberhang an der weiteren Stirnseite realisiert werden.

Vorzugweise weist jeder Strompfad einen ersten äußeren Beinabschnitt und einen zweiten äußeren Beinabschnitt auf, die durch die bezüglich der Reihenschaltung äußeren Beinabschnitte ausgebildet sind, wobei die äußeren Beinabschnitte jedes Strompfads in unmittelbar benachbarten Wicklungszonen für denselben Strang angeordnet sind, und die äußeren Beinabschnitte der Strompfade eines jeweiligen Strangs in jeweils unterschiedlichen Wicklungszonen angeordnet sind.

Es ist bei dem erfindungsgemäßen Stator grundsätzlich auch möglich, dass wenigstens eine Doppellage gegenüber einer zu ihr radial benachbarten Doppellage in Umfangsrichtung um eine Nut verschoben ist.

Die der Erfindung zugrundeliegende Aufgabe wird ferner gelöst durch eine elektrische Maschine, aufweisend einen erfindungsgemäßen Stator sowie einen drehbar bezüglich des Stators gelagerten Rotor.

Die elektrische Maschine kann eine Synchronmaschine sein. Der Rotor kann permanenterregt oder elektrisch erregt sein. Alternativ kann die elektrische Maschine eine Asynchronmaschine sein. Die elektrische Maschine ist bevorzugt dazu eingerichtet, ein Fahrzeug anzutreiben.

Die elektrische Maschine kann ferner eine Kühlvorrichtung aufweisen, die dazu eingerichtet ist, ein Kühlfluid auf die an der Stirnseite angeordneten Verbindungsabschnitte zu sprühen.

Die der Erfindung zugrundeliegende Aufgabe wird ferner gelöst durch ein Fahrzeug, aufweisend eine erfindungsgemäße elektrische Maschine, die zum Antreiben des Fahrzeugs eingerichtet ist.

Das Fahrzeug kann ein batterieelektrisches Fahrzeug (BEV) oder ein Hybridfahrzeug sein.

Weitere Vorteile und Einzelheiten der vorliegenden Erfindung ergeben sich aus den im Folgenden beschriebenen Ausführungsbeispielen sowie anhand der Zeichnungen. Diese sind schematische Darstellungen und zeigen:
- Fig. 1: eine Prinzipskizze eines Ausführungsbeispiel des erfindungsgemäßen Stators;
- Fig. 2: Prinzipskizzen von Formleitern des Stators;
- Fig. 3: ein Blockschaltbild der Statorwicklung des Stators;
- Fig. 4: eine Detaildarstellung der Wicklungszonen des Stators;
- Fig. 5 bis 7: jeweils ein Wicklungsschema eines Strangs der Statorwicklung;
- Fig. 8 u. 9: jeweils eine Detaildarstellung einer Wicklungszone gemäß weiteren Ausführungsbeispielen des Stators; und
- Fig. 10: eine Prinzipskizze eines Ausführungsbeispiels des erfindungsgemäßen Fahrzeugs mit einem Ausführungsbeispiel der erfindungsgemäßen elektrischen Maschine.

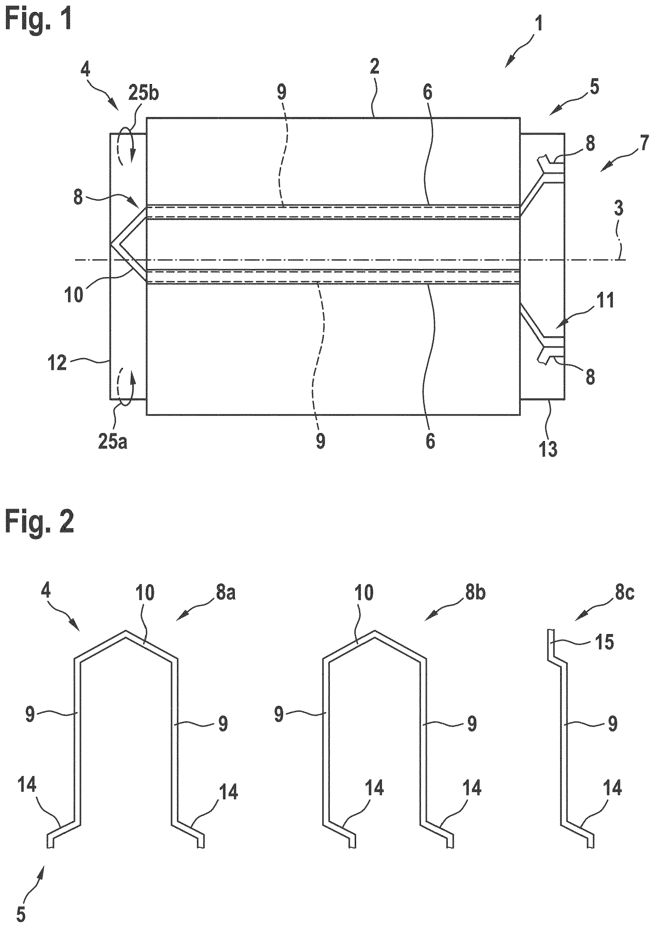

Fig. 1 ist eine Prinzipskizze eines Ausführungsbeispiel eines Stators 1.

Der Stator 1 weist einen Statorkern 2 auf, welcher eine Längsachse 3, eine erste Stirnseite 4 und eine der Stirnseite 4 gegenüberliegende weitere Stirnseite 5 aufweist. Von der Stirnseite 4 zur weiteren Stirnseite 5 erstreckt sich eine Vielzahl von in Umfangsrichtung angeordneten Nuten 6 des Statorkerns 2, von denen in Fig. 1 lediglich zwei schematisch dargestellt sind. Der Statorkern 2 ist exemplarisch aus einer Vielzahl von axial geschichtet angeordneten gegeneinander elektrisch isolierten Einzelblechen (nicht gezeigt) ausbildet, sodass er auch als Statorblechpaket bezeichnet oder erachtet werden kann.

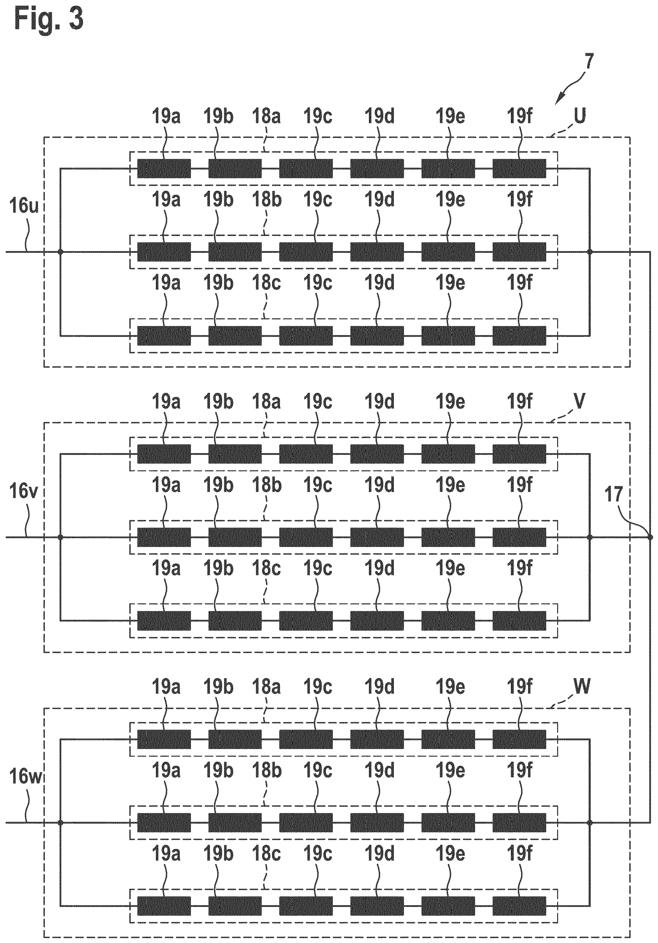

Der Stator 1 weist ferner eine Statorwicklung 7 auf, die im vorliegenden Ausführungsbeispiel N = 3 Stränge U, V, W (siehe Fig. 3) aufweist. Jeder Strang U, V, W ist durch Formleiter 8 ausgebildet, die innerhalb der Nuten 6 angeordnete Beinabschnitte 9 aufweisen. Die Formleiter 8 weisen ferner Verbindungsabschnitte 10, 11 auf, die jeweils zwei der Beinabschnitte 9 elektrisch leitfähig miteinander verbinden. Die Verbindungsabschnitte 10 sind an der Stirnseite 4 vorgesehen und bilden dort einen Wicklungskopf 12 aus. Die Verbindungsabschnitte 11 sind an der weiteren Stirnseite 5 vorgesehen und bilden dort einen weiteren Wicklungskopf 13 aus. In Fig. 1 sind lediglich ein Formleiter 8 vollständig und zwei andere Formleiter 8, die mit ihm einen der Verbindungsabschnitte 11 ausbilden, schematisch dargestellt.

Fig. 2 zeigt Prinzipskizze von Formleitern 8. Dabei sind im konkreten Ausführungsbeispiel Formleiter erster Art 8a, Formleiter zweiter Art 8b und Formleiter dritter Art 8c vorgesehen, die allgemein mit dem Bezugszeichen 8 bezeichnet sind.

Jeder Formleiter erster Art 8a weist zwei Beinabschnitte 9 und einen die zwei Beinabschnitte an der Stirnseite 4 verbindenden Verbindungsabschnitt 10 auf. An der weiteren Stirnseite 5 schließen sich an einen jeweiligen Beinabschnitt 9 der Formleiter erster Art 8a freie Enden 14 an, die jeweils mit einem freien Ende 14 eines anderen Formleiters 8a, 8b, 8c, stoffschlüssig elektrisch leitfähig verbunden sind, sodass die verbundenen freien Enden 14 einen Verbindungsabschnitt 11 an der weiteren Stirnseite 5 ausbilden. Die freien Enden 14 der Formleiter erster Art 8a weisen in Umfangsrichtung voneinander weg.

Jeder Formleiter zweiter Art 8b weist zwei Beinabschnitte 9 und einen die zwei Beinabschnitte an der Stirnseite 4 verbindenden Verbindungsabschnitt 10 auf. An der weiteren Stirnseite 5 schließen sich an einen jeweiligen Beinabschnitt 9 der Formleiter zweiter Art 8b freie Enden 14 an, die jeweils mit einem freien Ende 14 eines Formleiters erster Art 8a, stoffschlüssig elektrisch leitfähig verbunden sind, sodass die verbundenen freien Enden 14 einen Verbindungsabschnitt 11 an der weiteren Stirnseite 5 ausbilden. Die freien Enden 14 der Formleiter zweiter Art 8b weisen - im Gegensatz zu den Formleitern erster Art 8a - in dieselbe Umfangsrichtung.

Jeder Formleiter dritter Art 8c weist einen Beinabschnitt 9, ein freies Ende 15 an der Stirnseite 4 und ein freies Ende 14 an der weiteren Stirnseite 5 auf. Die Formleiter dritter Art 8c dienen zum Anschließen der Statorwicklung 7 und bilden jeweils mit einem Formleiter erster Art 8a an der weiteren Stirnseite 5 einen Verbindungsabschnitt 11 aus.

Die Formleiter 8 bzw. 8a, 8b, 8c sind jeweils durch einen mehrfach gebogenen, nicht biegeschlaffen Metallstab aus Kupfer mit einer rechteckigen oder abgerundet rechteckigen Querschnittfläche ausgebildet.

Fig. 3 ist ein Blockschaltbild der Statorwicklung 7 des Stators 1.

Wie bereits beschrieben weist die Statorwicklung 7 drei Stränge U, V, W auf. Dabei weist jeder Strang einen Phasenanschluss 16u, 16v, 16w auf. Die Stränge U, V, W sind an ihren den Phasenanschlüssen 16u, 16v, 16w gegenüberliegenden Enden zu einem Sternpunkt 17 zusammengeschaltet. Die Phasenanschlüsse 16u, 16v, 16w sind durch die freien Enden 15 an der Stirnseite 4 der Formleiter dritter Art 8c ausgebildet. Der Sternpunkt 17 ist durch eine elektrisch leitfähige Verbindung von freien Enden 15 der Formleiter dritter Art 8c an der Stirnseite 4 ausgebildet.

In diesem Ausführungsbeispiel ist konkret vorgesehen, dass jeder Strang U, V, W drei Strompfade 18a, 18b, 18c aufweist, die parallel geschaltet sind. Jeder Strompfad 18a, 18b, 18c weist eine Reihenschaltung von ersten bis L-ten, hier ersten bis sechsten, Leiterfolgen 19a-f auf. Die Leiterfolgen 19a-f sind entsprechend ihrer Reihenfolge entlang der Reihenschaltung benannt. Vom Phasenanschluss 16u, 16v, 16w zum Sternpunkt 17 folgt also auf die erste Leiterfolge 19a die zweite Leiterfolge 19b, auf die zweite Leiterfolge 19b die dritte Leiterfolge 19c, auf die dritte Leitfolge 19c die vierte Leiterfolge 19d, auf die vierte Leiterfolge die fünfte Leiterfolge 19e und auf die fünfte Leiterfolge 19e die sechste Leiterfolge 19f.

Jeder Leiterfolge 19a-f ist aus mehreren mittels der Verbindungsabschnitte 10, 11 in Reihe geschalteten Beinabschnitten 9 ausgebildet.

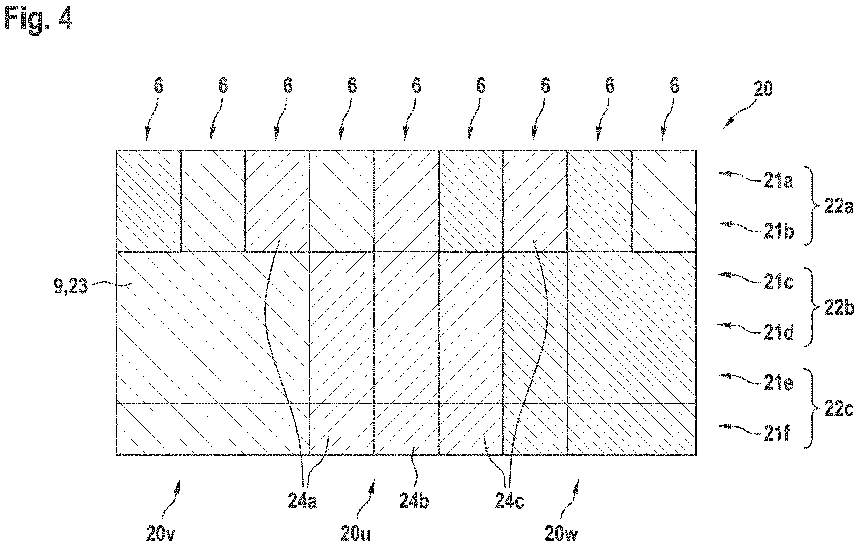

Fig. 4 ist eine Detaildarstellung einer Wicklungszone 20 für jeden Strang U, V, W des Stators 1. Dabei sind die Wicklungszonen allgemein mit dem Bezugszeichen 20 bezeichnet und Wicklungszonen für den Strang U mit 20u, für den Strang V mit 20v und für den Strang W mit 20w bezeichnet. In Fig. 4 sind die Wicklungszonen 20u, 20v, 20w durch unterschiedliche Schraffierungen gekennzeichnet.

Jede Nut 6 ist radial in erste bis L-te Lagen, also erste bis sechste Lagen 21a-f, untergliedert ist, die entsprechend ihrer Reihenfolge in Radialrichtung benannt sind. Dabei ist die erste Lage 21a exemplarisch die radial äußerste Lage. Die Lagen bilden erste bis (L/2)-te Doppellagen, also erste bis dritte Doppellagen 22a, 22b, 22c, aus. Dabei umfassen die erste Doppellage 22a die erste Lage 21a und die zweite Lage 21b, die zweite Doppellage 22b die dritte Lage 21c und die vierte Lage 21d und die dritte Doppellage 22c die fünfte Lage 21e und die sechste Lage 21f. Allgemein gesprochen umfasst die i-te Doppellage die (2i-1)-te und die (2i)-te Lage für alle natürlichen Zahlen 1 ≤ i ≤ (L/2), wobei i eine natürliche Zahl ist.

Jede Lage 21a-f in einer jeweiligen Nut 6 bildet einen Aufnahmeplatz 23 aus, in dem einer der Beinabschnitte 9 angeordnet ist. Die Aufnahmeplätze 23 sind in Fig. 4 jeweils durch ein Kästchen dargestellt. Der darin angeordnete Beinabschnitt 9 ist aus Gründen der Übersichtlichkeit nicht zusätzlich dargestellt. Die Aufnahmeplätze für einen jeweiligen Strang U, V, W bilden eine Anzahl 2·P = 6 Wicklungszonen 20 aus. Es sind also insgesamt sechs Wicklungszonen 20u, sechs Wicklungszonen 20v und sechs Wicklungszonen 20w vorgesehen. In jeder Wicklungszone 20 werden die Beinabschnitte 9 von den Strang U, V, W ausbildenden Formleitern 8 beim Anlegen einer N-phasigen, hier also einer dreiphasigen, Wechselspannung an die Statorwicklung 7 in dieselbe Stromrichtung durchflossen. P entspricht dabei der Anzahl von Polpaaren des Stators 1.

Jede Wicklungszone 20 umfasst in jeder der Lagen jeweils eine Anzahl q = 3 Aufnahmeplätze. q kann damit auch als Lochzahl des Stator 1 oder als Anzahl von Nuten 6 je Pol und Phase aufgefasst werden.

Im vorliegenden Ausführungsbeispiel sind innerhalb einer Anzahl A = 1 von Doppellagen, hier der ersten Doppellage 22a, einer jeweiligen Wicklungszone 20 die Aufnahmeplätze 23 mit einer in Umfangsrichtung benachbarten Wicklungszone 20 eines anderen der Stränge U, V, W derart verschachtelt, dass die Beinabschnitte 9 eines anderen der Stränge U, V, W in Umfangsrichtung beidseitig von zwei in der Doppellage 22a angeordneten Beinabschnitten 9 der jeweiligen Wicklungszone 20 umgeben sind. In Fig. 4, bei der nur eine Wicklungszone 20u des Strangs U vollständig gezeigt ist, sind also in der ersten Doppellage 22a die Beinabschnitt 9 eines jeweiligen anderen Strangs V, W beidseitig von zwei in der ersten Doppellage 22a angeordneten Beinabschnitten der Wicklungszone 20u umgeben. Dies gilt für die anderen Wicklungszonen 20v, 20w analog.

In den [(L/2)-A] übrigen Doppellagen, also in der zweiten Doppellage 22b und der dritten Doppellage 22c, erstreckt sich jede Wicklungszone über genau q = 3 Nuten 6. Die Aufnahmeplätze 23 der zweiten und dritten Doppellagen 22b, 22c sind also unverschachtelt.

In Fig. 4 ist ferner gezeigt, dass jede Wicklungszone 20 in erste bis q-te, also erste bis dritte, Teilwicklungszonen 24a, 24b, 24c untergliedert ist, die sich jeweils über alle Lagen erstrecken und entsprechend ihrer Reihenfolge in Umfangsrichtung benannt sind. Grenzen zwischen zwei benachbarten Teilwicklungszonen 24a, 24b, 24c derselben Wicklungszone 20 sind in Fig. 4 durch eine strichpunktierte Linie dargestellt.

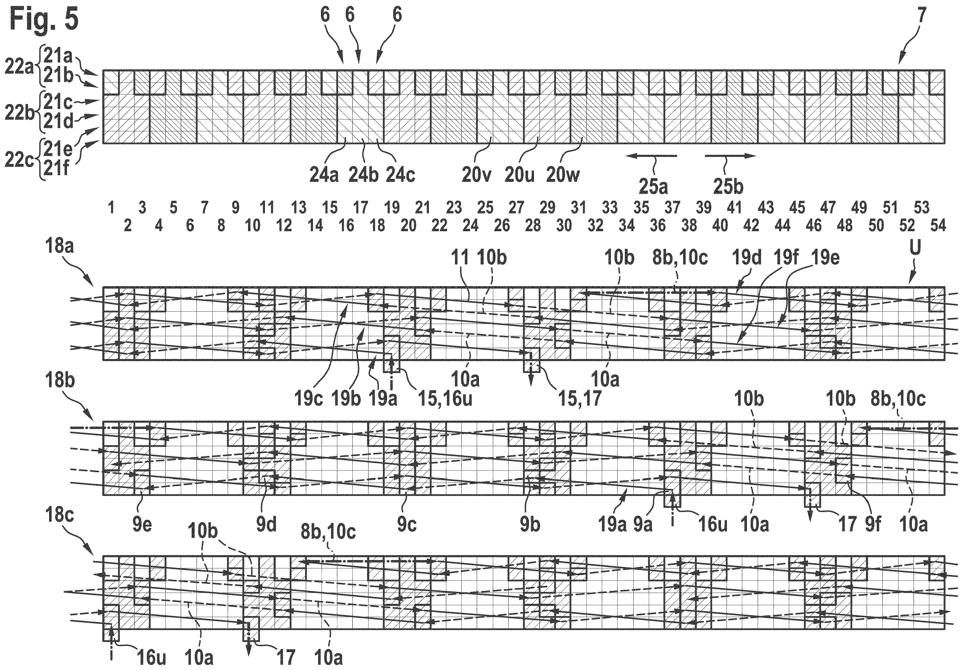

Fig. 5 ist ein Wicklungsschema des Strangs U der Statorwicklung 7. Dabei zeigt eine obere Tabelle die Verteilung der Wicklungszonen 20 auf die Nuten 6 und Lagen 21a-f. Die drei unteren Tabellen zeigen das Wicklungsschema, wobei Verbindungen an der Stirnseite 4 mittels den Verbindungsabschnitten 10 der Formleiter erster Art 8a durch gestrichelte Pfeile, Verbindungen an der Stirnseite 4 mittels den Verbindungsabschnitten 10 der Formleiter zweiter Art 8b durch strichpunktierte Pfeile und Verbindungsabschnitte 11 an der weiteren Stirnseite 5 durch durchgezogene Pfeile dargestellt sind.

Im Statorkern 2 sind erste bis (2·N·P·q)-te Nuten, also erste bis vierundfünfzigste Nuten 6, vorgesehen sind, die entsprechend ihrer Reihenfolge in Umfangsrichtung benannt sind. Eine entsprechende Nutnummerierung ist unterhalb der oberen Tabelle angebracht.

Für den Strang U befinden die Aufnahmeplätze 23 innerhalb der Doppellage 22a, in denen die Aufnahmeplätze 23 verschachtelt sind, in der zweiten, vierten, neunten, elften, dreizehnten, achtzehnten, zwanzigsten, zweiundzwanzigsten, siebenundzwanzigsten, neunundzwanzigsten, einunddreißigsten, sechsunddreißigsten, achtunddreißigsten, vierzigsten, fünfundvierzigsten, siebenundvierzigsten, neunundvierzigsten und vierundfünfzigsten Nut 6. Allgemein gesprochen befinden sich die Aufnahmeplätze innerhalb der Doppellage 22a, in denen die Aufnahmeplätze 23 verschachtelt sind, in der zweiten Nut 6, der (q+1)-ten Nut 6, der (2-N-P-q)-ten Nut, in der (x-q-N)-ten Nut 6 und der [(x·q·N)+q+1]-ten Nut 6 sowie [(x·q·N)+2]-ten bis [(x·q·N)+q-1]-ten Nut 6 in der für alle natürlichen Zahlen 1 ≤ x ≤ [(2-P)-1].

Die Aufnahmeplätze 23 innerhalb der zweiten und dritten Doppellage 22b, 22c, in den sich die jeweilige Wicklungszone 20 über genau q = 3 Nuten 6 erstreckt, befinden sich in der ersten bis dritten Nut 6, in der zehnten bis zwölften Nut 6, in der neunzehnten bis einundzwanzigsten Nut 6, in der achtundzwanzigsten bis dreißigsten Nut 6, in der siebenunddreißigsten bis neununddreißigsten Nut 6 und in der sechsundvierzigsten bis achtundvierzigsten Nut 6. Allgemein gesprochen befinden sich die Aufnahmeplätze innerhalb der [(L/2)-A] Doppellagen 22b, 22c, in den sich die jeweilige Wicklungszone 20 über genau q Nuten 6 erstreckt, in den x-ten bis (x+q-1)-ten Nuten 6 für alle natürlichen Zahlen 1 ≤ x ≤ [(2·P)-1].

Wie aus Fig. 5 ersichtlich ist, sind die Beinabschnitte 9 der ersten Leiterfolge 19a, welche am Phasenanschluss 16u beginnt, in der ersten Doppellage 22a, die Beinabschnitte 9 der zweiten Leiterfolge 19b in der zweiten Doppellage 22b, die Beinabschnitte 9 der dritten Leiterfolge 19c in der dritten Doppellage 22c, die Beinabschnitte 9 der vierten Leiterfolge 19d in der dritten Doppellage 22c, die Beinabschnitte 9 der fünften Leiterfolge 19e in der zweiten Doppellage 22b und die Beinabschnitte der sechsten Leiterfolge 19f, welche am Sternpunkt 17 endet, in der ersten Doppellage 22a angeordnet. Innerhalb der Doppellagen 22a, 22b, 22c wechseln die Beinabschnitte 9 die Lagen 21a-f der jeweiligen Doppellage 22a, 22b, 22c. Die bezüglich der Reihenschaltung unmittelbar aufeinander folgenden Beinabschnitte 9 der dritten Leiterfolge 19c und der vierten Leiterfolge 19d sind in der ersten Lage 21a angeordnet.

Dabei erstrecken sich die ersten bis (L/2)-ten Leiterfolgen, also die erste, zweite und dritte Leiterfolge 19a, 19b, 19c, entlang einer vorgegebenen ersten Umfangsrichtung 25a um den Statorkern 2 und die [(L/2)+1]-ten bis L-ten Leiterfolgen, also die vierte, fünfte und sechste Leiterfolge 19d, 19e, 19f, entlang einer der ersten Umfangsrichtung 25a entgegengesetzten zweiten Umfangsrichtung 25b um den Statorkern 2 erstrecken. Die erste Umfangsrichtung 25a entspricht hier von der Stirnseite 4 aus gesehen exemplarisch dem Gegenuhrzeigersinn (vgl. Fig. 1).

Wie in Fig. 5 ferner zu sehen ist, umfasst jede Leiterfolge 19a-f erste bis 2·P-te Beinabschnitte, also erste bis sechste Beinabschnitte 9a-f, die entsprechend ihrer Reihenfolge entlang der Reihenschaltung benannt sind. Die Bezugszeichen 9a-f sind dabei aus Gründen der Übersichtlichkeit nur für die erste Leiterfolge 19a des zweiten Strompfads 18b eingetragen.

Jede Leiterfolge 19a-f belegt alle Teilwicklungszonen 24a, 24b 24c. Dabei sind bei der ersten, dritten und fünften Leiterfolge 19a, 19c, 19e die ersten und zweiten Beinabschnitte 9a, 9b in der ersten Teilwicklungszone 24a, die dritten und vierten Beinabschnitte 9c, 9d in der zweiten Teilwicklungszone 24b und die fünften und sechsten Beinabschnitte 9e, 9f in der dritten Teilwicklungszone 24c angeordnet. Dabei bei der zweiten, vierten und sechsten Leiterfolge 19b, 19d, 19f sind die ersten und zweiten Beinabschnitte 9a, 9b in der dritten Teilwicklungszone 24c, die dritten und vierten Beinabschnitte 9c, 9d in der zweiten Teilwicklungszone 24b und die fünften und sechsten Beinabschnitte 9e, 9f in der ersten Teilwicklungszone 24a angeordnet. Allgemein gesprochen sind bei den ungeradzahlig benannten Leiterfolgen die [(j·2·P/q)+1]-ten bis [(j+1)·2·P/q]-ten Beinabschnitte in den (j+1)-ten Teilwicklungszone angeordnet, für alle ganzen Zahlen 0 ≤ j ≤ (q-1), und bei den geradzahlig benannten Leiterfolgen die [(k·2·P/q)+1]-ten bis [(k+1)·2·P/q]-ten Beinabschnitte in den (q-k)-ten Teilwicklungszone angeordnet, für alle ganzen Zahlen 0 ≤ k ≤ (q-1).

Die an der Stirnseite 4 angeordneten Verbindungsabschnitte 10 der dritten und vierten Leiterfolge 19c, 19d, also jene, deren Beinabschnitte 9 in den verschachtelten Aufnahmeplätzen 23 angeordnet sind, verbinden Beinabschnitte 9, die in N·q-2 = 7 Nuten 6 voneinander entfernten Aufnahmeplätzen 23 angeordnet sind. Die an der Stirnseite 4 angeordneten Verbindungsabschnitte 10 der zweiten und fünften Leiterfolge 19b, 19e verbinden Beinabschnitte 9, die in N·q+1 = 10 Nuten 6 voneinander entfernten Aufnahmeplätzen 23 angeordnet sind. Die an der Stirnseite 4 angeordneten Verbindungsabschnitte 10 der ersten und sechsten Leiterfolge 19a, 19f verbinden Beinabschnitte 9, die in N·q-1 = 8 Nuten 6 voneinander entfernten Aufnahmeplätzen 23 angeordnet sind.

Da die größere Entfernung der Aufnahmeplätze 23 in der zweiten Doppellage 22b eine größere axiale Erstreckung der Verbindungsabschnitte 10 nach sich zieht, ist ein Wicklungsüberhang der des Wicklungskopfs 12 (siehe Fig. 1) an der Stirnseite 4 in der zweiten Doppellage 22b größer. Dies hat den Vorteil, dass diese Verbindungsabschnitte 10 durch eine Sprühkühlung besser als bei einem einheitlichen Wicklungsüberhang erreicht werden können.

In Fig. 5 sind Verbindungsabschnitte, die den sechsten Beinabschnitt 9f der ersten Leiterfolge 19a oder der fünften Leiterfolge 19e mit dem ersten Beinabschnitt 9a der zweiten Leiterfolge 19b bzw. der sechsten Leiterfolge 19f verbinden, gesondert mit 10a bezeichnet. Diese Beinabschnitte 9a, 9f sind N·q = 9 Nuten 6 voneinander entfernt.

Verbindungsabschnitte, die den sechsten Beinabschnitt 9f der zweiten Leiterfolge 19b oder der vierten Leiterfolge 19d mit dem ersten Beinabschnitt 9a der dritten Leiterfolge 19c bzw. der fünften Leiterfolge 19e verbinden, sind gesondert mit 10b bezeichnet. Diese Beinabschnitte 9a, 9f sind N·q+1 = 10 Nuten 6 voneinander entfernt.

Verbindungsabschnitte, die den sechsten Beinabschnitt 9f der dritten Leiterfolge 19c mit dem ersten Beinabschnitt 9a der vierten Leiterfolge 19d verbinden, sind gesondert mit 10c bezeichnet. Diese Beinabschnitte 9a, 9f sind N·q = 9 Nuten 6 voneinander entfernt. Sie sind zudem durch Formleiter zweiter Art 8b ausgebildet, während die übrigen Verbindungabschnitte 10 an der Stirnseite 4 durch Formleiter erster Art 8a ausgebildet sind.

Die Verbindungsabschnitte 11 an der zweiten Stirnseite 5 verbinden allesamt Beinabschnitte 9, die N·q = 9 Nuten 6 voneinander entfernt sind.

Darüber hinaus weist jeder Strompfad 18a, 18b, 18b einen ersten äußeren Beinabschnitt, hier den ersten Beinabschnitt 9a der ersten Leiterfolge 19a, und einen zweiten äußeren Beinabschnitt, hier den sechsten Beinabschnitt 9f der sechsten Leiterfolge 19f auf. Die äußeren Beinabschnitte 9a, 9f jedes Strompfads 18a, 18b, 18b sind in unmittelbar benachbarten Wicklungszonen 20 für denselben Strang U, V, W angeordnet. Die äußeren Beinabschnitte 9a, 9f der Strompfade 18a, 18b, 18c eines jeweiligen Strangs U, V, W sind in jeweils unterschiedlichen Wicklungszonen 20 angeordnet.

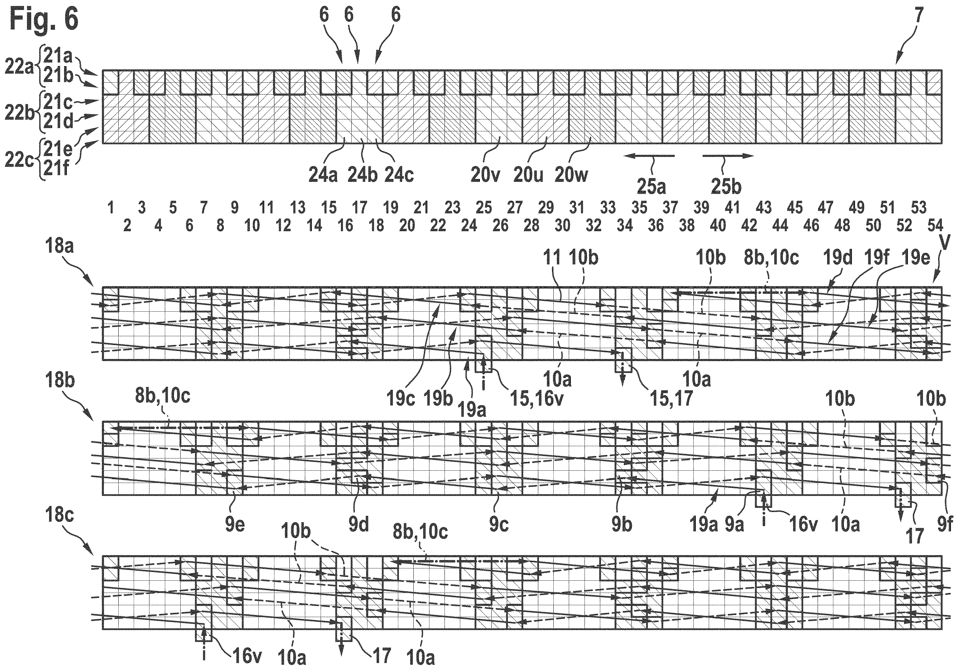

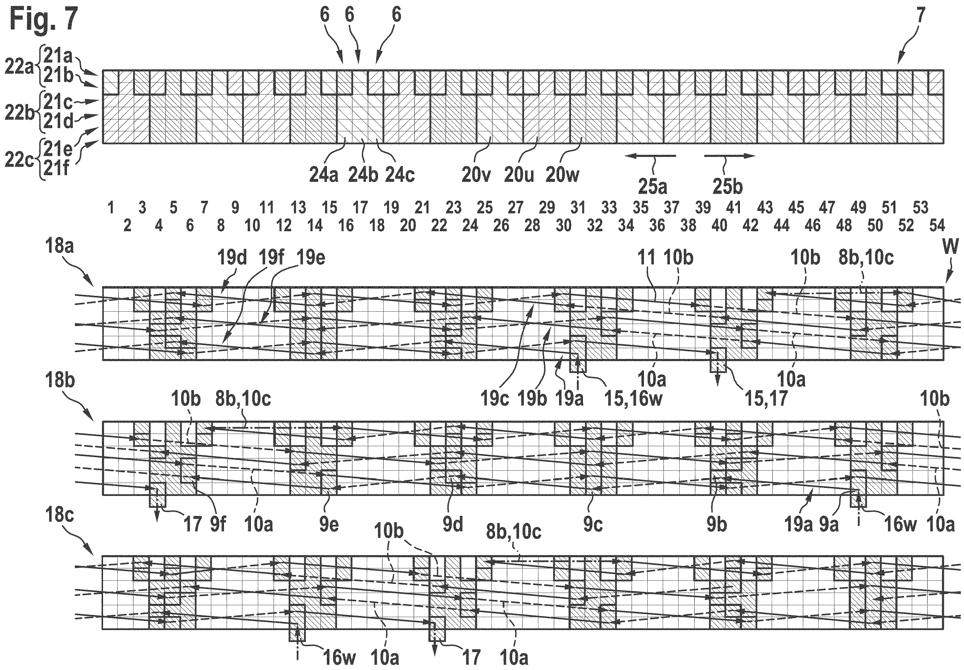

Fig. 6 und Fig. 7 zeigen jeweils ein Wicklungsschema der Stränge V, W der Statorwicklung 7, deren Darstellung jener in Fig. 5 entspricht. Insoweit sind gleiche oder gleichwirkende Komponenten mit identischen Bezugszeichen versehen. Ersichtlich entsprechen die Wicklungsschemata der Stränge V, W bis auf eine Verschiebung um q Nuten in Umfangsrichtung dem in Fig. 5 gezeigten Wicklungsschema des Strangs U.

Gemäß einem weiteren Ausführungsbeispiel des Stators 1 sind die Strompfade 18a, 18b, 18c eines jeweiligen Strangs U, V, W in Reihe geschaltet. Gemäß einem weiteren Ausführungsbeispiel ist die erste Lage die radial innerste Lage. Gemäß einem weiteren Ausführungsbeispiel können die Aufnahmeplätze von zwei oder mehr Doppellagen 22a, 22b verschachtelt sein.

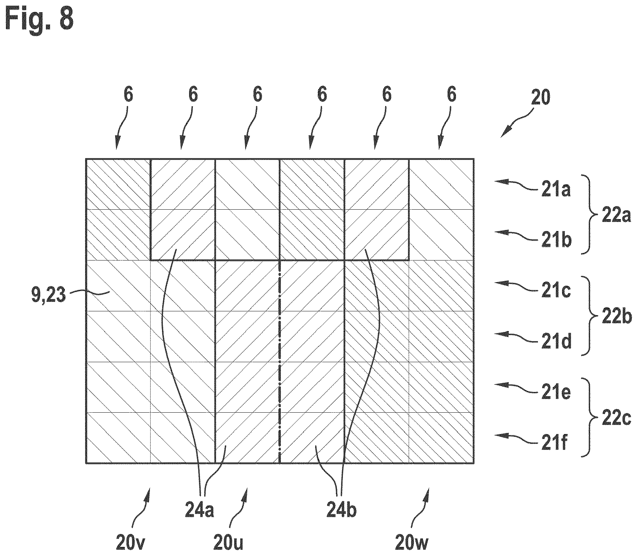

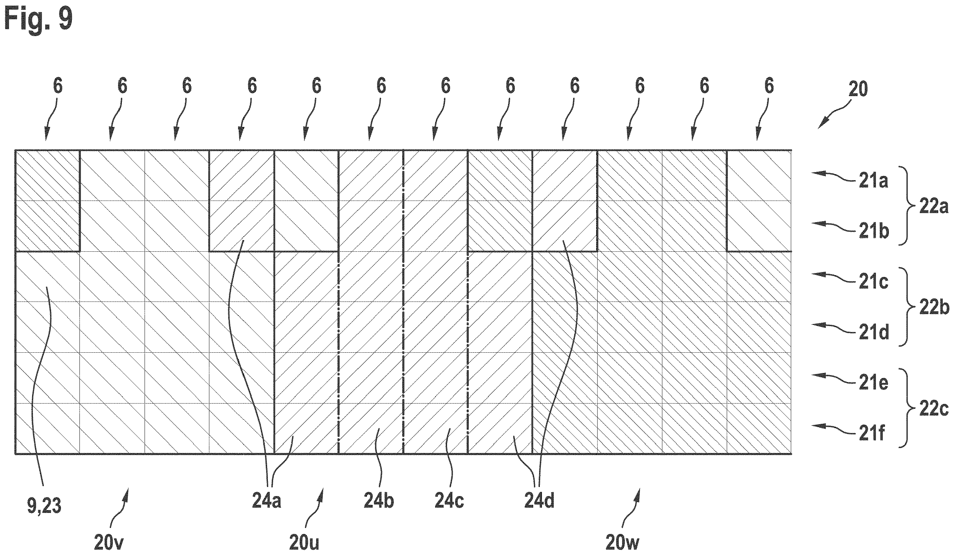

Fig. 8 und Fig. 9 sind jeweils eine Detaildarstellung einer Wicklungszone gemäß weiteren Ausführungsbeispielen des Stators 1, wobei die Darstellung jener in Fig. 4 entspricht. Bei dem Ausführungsbeispiel gemäß Fig. 8 beträgt die Lochzahl q = 2. Dementsprechend sind lediglich zwei Teilwicklungszonen 24a, 24b vorgesehen. Bei dem Ausführungsbeispiel gemäß Fig. 9 beträgt die Lochzahl q = 4. Dementsprechend ist vier Teilwicklungszonen 24a-d vorgesehen.

Im Übrigen lässt sich gemäß weiteren Ausführungsbeispielen auch die Polpaarzahl variieren, so dass beispielsweise P = 2, P = 4, P = 5 oder P = 6 Polpaare vorgesehen sein können. Ebenso kann die Zahl der Stränge beispielsweise auch N = 6 betragen.

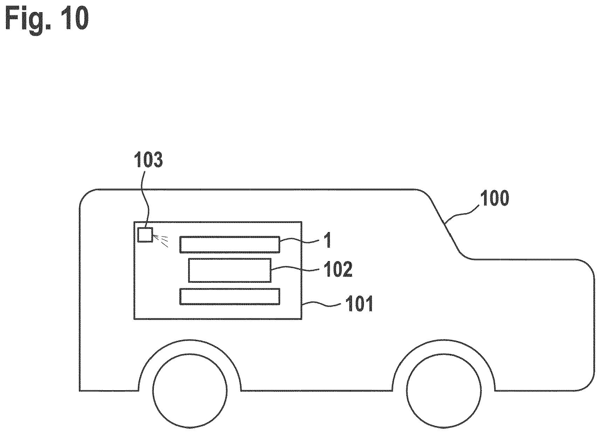

Fig. 10 ist eine Prinzipskizze eines Ausführungsbeispiels eines Fahrzeugs 100 mit einem Ausführungsbeispiel einer elektrischen Maschine 101.

Die elektrische Maschine 101 weist einen Stator 1 gemäß einem der zuvor beschriebenen Ausführungsbeispiele auf. Daneben weist die elektrische Maschine 101 einen drehbar bezüglich es Stator 1 gelagerten Rotor 102 auf. Dabei entspricht eine Drehachse des Rotors 102 der Längsachse 3 (siehe Fig. 1) des Stators 1. Die elektrische Maschine 101 kann eine Synchronmaschine sein, bei der der Rotor 102 permanenterregt oder elektrisch erregt ist. Die elektrische Maschine 101 kann alternativ eine Asynchronmaschine sein.

Die elektrische Maschine 101 ist zum Antreiben des Fahrzeugs 100 eingerichtet, welches insoweit als batterieelektrische Fahrzeug (BEV) oder Hybridfahrzeug ausgebildet sein kann.

Optional weist die elektrische Maschine 101 eine Kühlvorrichtung 103 auf, die dazu eingerichtet ist, ein Kühlfluid auf die an der Stirnseite 4 angeordneten Verbindungsabschnitte 10 zu sprühen.

## Patentansprüche

1. Stator (1) für eine elektrische Maschine (101), aufweisend einen Statorkern (2), welcher eine Längsachse (3), eine Stirnseite (4), eine der Stirnseite (4) gegenüberliegende weitere Stirnseite (5) und eine Vielzahl von in Umfangsrichtung angeordneten Nuten (6), die sich von der Stirnseite (4) zur weiteren Stirnseite (5) erstrecken, aufweist, und eine Statorwicklung (7), die eine Anzahl N Stränge (U, V, W) aufweist, wobei N ≥ 3, wobei
- jeder Strang (U, V, W) durch Formleiter (8) ausgebildet ist, die innerhalb der Nuten (6) angeordnete Beinabschnitte (9) und Verbindungsabschnitte (10, 11), die jeweils zwei der Beinabschnitte (9) an den Stirnseiten (4, 5) elektrisch leitfähig miteinander verbinden, aufweisen, wobei
- jede Nut (6) radial in erste bis L-te Lagen (21a-f) untergliedert ist, die nach ihrer Reihenfolge in Radialrichtung benannt sind, wobei die Lagen (21a-f) erste bis (L/2)-te Doppellagen (22a-c) ausbilden, wobei die i-te Doppellage (22a-c) die (2i-1)-te und die (2i)-te Lage (21a-f) für alle natürlichen Zahlen 1 ≤ i ≤ (L/2) umfasst, wobei L ≥ 4 und gerade ist, wobei L und i natürliche Zahlen sind, wobei
- jede Lage (21a-f) in einer jeweiligen Nut (6) einen Aufnahmeplatz (23) bildet, in dem einer der Beinabschnitte (9) angeordnet ist, wobei
- die Aufnahmeplätze (23) für einen jeweiligen Strang (U, V, W) eine Anzahl 2·P Wicklungszonen (20) ausbilden und in einer jeweiligen Wicklungszone (20) die Beinabschnitte (9) von den Strang (U, V, W) ausbildenden Formleitern (8) beim Anlegen einer N-phasigen Wechselspannung an die Statorwicklung (7) in dieselbe Stromrichtung durchflossen werden, wobei 2·P ≥ 6, wobei P eine natürliche Zahl ist, wobei
- jede Wicklungszone (20) in jeder der Lagen jeweils eine Anzahl q ≥ 2 Aufnahmeplätze (23) umfasst, wobei q eine natürliche Zahl ist,
**dadurch gekennzeichnet, dass**
innerhalb einer Anzahl A von Doppellagen (22a) einer jeweiligen Wicklungszone (20) die Aufnahmeplätze (23) mit einer in Umfangsrichtung benachbarten Wicklungszone (20) eines anderen der Stränge (U, V, W) derart verschachtelt sind, dass die Beinabschnitte (9) des anderen Strangs (U, V, W) in Umfangsrichtung beidseitig von zwei in der Doppellage (22a) angeordneten Beinabschnitten (9) der jeweiligen Wicklungszone (20) umgeben sind, wobei 1 ≤ A ≤ (L/2)-1 ist, wobei A eine natürliche Zahl ist.

2. Stator nach Anspruch 1, wobei
zumindest innerhalb der ersten oder der (L/2)-ten Doppellage (22a) die Aufnahmeplätze (23) verschachtelt sind.

3. Stator nach Anspruch 1 oder 2, wobei
sich die jeweilige Wicklungszone (20) innerhalb der [(L/2)-A] übrigen Doppellagen (22b, 22c) jeweils über genau q Nuten (6) erstreckt.

4. Stator nach Anspruch 3, wobei
erste bis (2·N·P·q)-te Nuten (6) vorgesehen sind, die entsprechend in der Reihenfolge in Umfangsrichtung benannt sind, wobei sich für einen der Stränge (U, V, W)
- die Aufnahmeplätze (23) innerhalb der Doppellagen (22a), in denen die Aufnahmeplätze (23) verschachtelt sind, in der (q+1)-ten Nut (6) und der (2·N·P·q)-ten Nut (6) sowie in der (x·q·N)-ten Nut (6) und der [(x·q·N)+q+1]-ten Nut (6) für alle natürlichen Zahlen 1 ≤ x ≤ [(2·P)-1] befinden und
- die Aufnahmeplätze (23) innerhalb der [(L/2)-A] Doppellagen (23b, 23c), in den sich die jeweilige Wicklungszone (20) über genau q Nuten (6) erstreckt, in den x-ten bis (x+q-1)-ten Nuten (6) befinden,
für alle natürlichen Zahlen 1 ≤ x ≤ [(2·P)-1].

5. Stator nach Anspruch 4, wobei
q ≥ 3 ist und sich für den Strang (U, V, W) die Aufnahmeplätze (23) innerhalb der Doppellagen (23a), in denen die Aufnahmeplätze verschachtelt sind, auch in der zweiten bis (q-1)-ten Nut (6) sowie in der [(x·q·N)+2]-ten bis [(x·q·N)+q-1]-ten Nut befinden.

6. Stator nach einem der vorhergehenden Ansprüche, wobei eine axiale Erstreckung von Verbindungsabschnitten (10), die in den verschachtelten Aufnahmeplätzen (23) angeordnete Beinabschnitte (9) an der Stirnseite (4) verbinden, geringer als von Verbindungsabschnitten (10) ist, die in den Aufnahmeplätzten (23) der [(L/2)-A] übrigen Doppellagen (22b, 22b) angeordnete Beinabschnitte an der Stirnseite verbinden.

7. Stator nach einem der vorhergehenden Ansprüche, wobei jeder Strang (U, V, W) mehrere Strompfade (18a-c) aufweist, die jeweils eine Reihenschaltung von ersten bis L-ten Leiterfolgen (19a-f) aus mehreren in Reihe geschalteten Beinabschnitten (9) aufweisen, wobei die Leiterfolgen (19a-f) entsprechend ihrer Reihenfolge entlang der Reihenschaltung benannt sind.

8. Stator nach Anspruch 7, wobei
die Beinabschnitte (9) einer jeweiligen Leiterfolge (19a-f) in einer einzigen Doppellage (22a-c) angeordnet sind und entlang des Strompfads die Lagen (21a-f) der Doppellage (22a-c) wechseln.

9. Stator nach Anspruch 7 oder 8, wobei
sich die ersten bis (L/2)-ten Leiterfolgen (19a-c) entlang einer vorgegebenen ersten Umfangsrichtung (25a) um den Statorkern (2) erstrecken und die [(L/2)+1]-ten bis L-ten Leiterfolgen (19d-f) entlang einer der ersten Umfangsrichtung (25a) entgegengesetzten zweiten Umfangsrichtung (25b) um den Statorkern (2) erstrecken.

10. Stator nach Anspruch 9, wobei
die bezüglich der Reihenschaltung unmittelbar aufeinander folgenden Beinabschnitte (9) der (L/2)-ten Leiterfolge (19c) und der [(L/2)+1]-ten Leiterfolge (19d) in derselben Lage (21a), insbesondere der ersten Lage (21a) oder der L-ten Lage (21f), angeordnet sind.

11. Stator nach einem der Ansprüche 7 bis 10, wobei
jede Wicklungszone (20) in erste bis q-te Teilwicklungszonen (24a-c) untergliedert ist, die sich jeweils über alle Lagen (21a-f) erstrecken und entsprechend ihrer Reihenfolge in Umfangsrichtung benannt sind, wobei jede Leiterfolge (19a-f) alle Teilwicklungszonen (24a-c) belegt.

12. Stator nach Anspruch 11, wobei
jede Leiterfolge (19a-f) erste bis (2-P)-te Beinabschnitte (9) umfasst, die entsprechend ihrer Reihenfolge entlang der Reihenschaltung benannt sind, wobei
- bei den ungeradzahlig benannten Leiterfolgen (19a, 19c, 19e) die [(j·2·P/q)+1]-ten bis [(j+1)·2·P/q]-ten Beinabschnitte (9) in den (j+1)-ten Teilwicklungszone (24a-c) angeordnet sind, für alle ganzen Zahlen 0 ≤ j ≤ (q-1) und/oder
- bei den geradzahlig benannten Leiterfolgen (19b, 19d, 19f) die [(k·2·P/q)+1]-ten bis [(k+1)·2·P/q]-ten Beinabschnitte (9) in den (q-k)-ten Teilwicklungszone (24a-c) angeordnet sind, für alle ganzen Zahlen 0 ≤ k ≤ (q-1).

13. Stator nach einem der Ansprüche 7 bis 12, wobei
jeder Strompfad (18a-c) einen ersten äußeren Beinabschnitt (9) und einen zweiten äußeren Beinabschnitt (9) aufweist, die durch die bezüglich der Reihenschaltung äußeren Beinabschnitte (9) ausgebildet sind, wobei die äußeren Beinabschnitte (9) jedes Strompfads (18a-c) in unmittelbar benachbarten Wicklungszonen (20) für denselben Strang (U, V, W) angeordnet sind, und die äußeren Beinabschnitte (9) der Strompfade (18a-c) eines jeweiligen Strangs (U, V, W) in jeweils unterschiedlichen Wicklungszonen (20) angeordnet sind.

14. Elektrische Maschine (101), aufweisend einen Stator (1) nach einem der vorhergehenden Ansprüche sowie einen drehbar bezüglich des Stators (1) gelagerten Rotor (102).

15. Fahrzeug (100), aufweisend eine elektrische Maschine (101) nach Anspruch 14, die zum Antreiben des Fahrzeugs (100) eingerichtet ist.

## Claims

1. Stator (1) for an electric machine (101), comprising a stator core (2) which has a longitudinal axis (3), an end side (4), a further end side (5) opposite the end side (4) and a plurality of slots (6) arranged in the circumferential direction and extending from the end side (4) to the further end side (5), and a stator winding (7) which has a number N of phases (U, V, W), wherein N ≥ 3, wherein
- each phase (U, V, W) is formed by shaped conductors (8) which have leg portions (9) arranged within the slots (6) and connecting portions (10, 11) which electrically conductively connect two of the leg portions (9) to each other at the end sides (4, 5), wherein
- each slot (6) is radially subdivided into first to L-th layers (21a-f) which are named according to their order in the radial direction, wherein the layers (21a-f) form first to (L/2)-th double layers (22a-c), wherein the i-th double layer (22a-c) comprises the (2i-1)-th and the (2i)-th layer (21a-f) for all natural numbers 1 ≤ i ≤ (L/2), wherein L ≥ 4 and is even, wherein L and i are natural numbers, wherein
- each layer (21a-f) forms a receiving location (23) in a respective slot (6) in which one of the leg portions (9) is arranged, wherein
- the receiving locations (23) for a respective phase (U, V, W) form a number of 2·P winding zones (20) and in a respective winding zone (20) the leg portions (9) are traversed by the phase-forming (U, V, W) shaped conductors (8) in the same current direction when an N-phase alternating voltage is applied to the stator winding (7), wherein 2·P ≥ 6, wherein P is a natural number, wherein
- each winding zone (20) in each of the layers comprises a number q ≥ 2 of receiving locations (23), wherein q is a natural number,
**characterized in that**
within a number A of double layers (22a) of a respective winding zone (20), the receiving locations (23) are interlaced with a circumferentially adjacent winding zone (20) of another of the phases (U, V, W) in such a way that the leg portions (9) of the other phase (U, V, W) are surrounded on both sides in the circumferential direction by two leg portions (9) of the respective winding zone (20) arranged in the double layer (22a), wherein 1 ≤ A ≤ (L/2)-1, wherein A is a natural number.

2. Stator according to Claim 1, wherein
the receiving locations (23) are interlaced at least within the first or the (L/2)-th double layer (22a).

3. Stator according to Claim 1 or 2, wherein
the respective winding zone (20) within the [(L/2)-A] remaining double layers (22b, 22c) extends over exactly q slots (6) in each case.

4. Stator according to Claim 3, wherein
first to (2·N·P·q)-th slots (6) are provided, which are named according to their order in the circumferential direction, wherein, for one of the phases (U, V, W)
- within the double layers (22a) in which the receiving locations (23) are interlaced, the receiving locations (23) are located in the (q+1)-th slot (6) and the (2·N·P·q)-th slot (6) and in the (x·q·N)-th slot (6) and the [(x·q·N)+q+1]-th slot (6) for all natural numbers 1 ≤ x ≤ [(2·P)-1] and
- the receiving locations (23) within the [(L/2)-A] double layers (23b, 23c), in which the respective winding zone (20) extends over exactly q slots (6), are located in the x-th to (x+q-1)-th slots (6).
for all natural numbers 1 ≤ x ≤ [(2·P)-1].

5. Stator according to Claim 4, wherein
q ≥ 3 and for the phase (U, V, W) the receiving locations (23) within the double layers (23a), in which the receiving locations are interlaced, are also located in the second to (q-1)-th slot (6) and in the [(x·q·N)+2]-th to [(x·q·N)+q-1]-th slot.

6. Stator according to one of the preceding claims, wherein
an axial extent of connecting portions (10) which connect leg portions (9) arranged in the interlaced receiving locations (23) at the end side (4) is smaller than that of connecting portions (10) which connect leg portions arranged in the receiving locations (23) of the [(L/2)-A] remaining double layers (22b, 22b) at the end side.

7. Stator according to one of the preceding claims, wherein
each phase (U, V, W) can have several current paths (18a-c), each of which has a series connection of first to L-th conductor sequences (19a-f) of several leg portions (9) connected in series, wherein the conductor sequences (19a-f) are named according to their order along the series connection.

8. Stator according to Claim 7, wherein
the leg portions (9) of a respective conductor sequence (19a-f) are arranged in a single double layer (22a-c) and the layers (21a-f) of the double layer (22a-c) alternate along the current path.

9. Stator according to Claim 7 or 8, wherein
the first to (L/2)-th conductor sequences (19a-c) extend around the stator core (2) along a predetermined first circumferential direction (25a) and the [(L/2)+1]-th to L-th conductor sequences (19d-f) extend around the stator core (2) along a second circumferential direction (25b) that is opposite to the first circumferential direction (25a) .

10. Stator according to Claim 9, wherein
the leg portions (9) of the (L/2)-th conductor sequence (19c) and the [(L/2)+1]-th conductor sequence (19d), which are directly consecutive with respect to the series connection, are arranged in the same position (21a), in particular the first position (21a) or the L-th position (21f) .

11. Stator according to one of Claims 7 to 10, wherein each winding zone (20) is subdivided into first to q-th partial winding zones (24a-c), each of which extends over all layers (21a-f) and is named according to its order in the circumferential direction, wherein each conductor sequence (19a-f) occupies all partial winding zones (24a-c) .

12. Stator according to Claim 11, wherein
each conductor sequence (19a-f) comprises first to (2·P)-th leg portions (9), which are named according to their order along the series connection, wherein
- in the odd-numbered conductor sequences (19a, 19c, 19e), the [(j·2·P/q)+1]-th to [(j+1) ·2·P/q]-th leg portions (9) are arranged in the (j+1)-th partial winding zone (24a-c), for all integers 0 ≤ j ≤ (q-1) and/or
- in the even-numbered conductor sequences (19b, 19d, 19f), the [(k·2·P/q)+1]-th to [(k+1)·2·P/q]-th leg portions (9) are arranged in the (q-k)-th partial winding zone (24a-c), for all integers 0 ≤ k ≤ (q-1).

13. Stator according to one of Claims 7 to 12, wherein each current path (18a-c) has a first outer leg portion (9) and a second outer leg portion (9) formed by the outer leg portions (9) with respect to the series connection, wherein the outer leg portions (9) of each current path (18a-c) are arranged in immediately adjacent winding zones (20) for the same phase (U, V, W), and the outer leg portions (9) of the current paths (18a-c) of a respective phase (U, V, W) are arranged in respectively different winding zones (20).

14. Electric machine (101), comprising a stator (1) according to one of the preceding claims and a rotor (102) mounted rotatably relative to the stator (1).

15. Vehicle (100) having an electric machine (101) according to Claim 14, which is set up to drive the vehicle (100).

## Revendications

1. Stator (1) pour une machine électrique (101), présentant un noyau de stator (2) qui présente un axe longitudinal (3), une face frontale (4), une face frontale supplémentaire (5) opposée à la face frontale (4) et une pluralité d'encoches (6) disposées dans la direction circonférentielle et qui s'étendent de la face frontale (4) à la face frontale supplémentaire (5), et un enroulement de stator (7) qui présente un nombre N de phases (U, V, W), dans lequel N ≥ 3, dans lequel
- chaque phase (U, V, W) est réalisé par des conducteurs façonnés (8) qui présentent des sections de branche (9) disposées à l'intérieur des encoches (6) et des sections de liaison (10, 11) qui relient respectivement deux des sections de branche (9) au niveau des faces frontales (4, 5) de manière électriquement conductrice, dans lequel
- chaque encoche (6) est radialement subdivisée en première à L-ième couches (21a-f) qui sont nommées selon leur ordre dans la direction radiale, les couches (21a-f) réalisant des première à (L/2)-ième couches doubles (22a-c), dans lequel la i-ième couche double (22a-c) comprend la (2i-1)-ième et la (2i)-ième couche (21a-f) pour tous les nombres naturels 1 ≤ i ≤ (L/2), dans lequel L ≥ 4 et est pair, L et i étant des nombres naturels, dans lequel
- chaque couche (21a-f) forme dans l'encoche (6) respective un emplacement de réception (23) dans lequel est disposée l'une des sections de branches (9), dans lequel
- les emplacements de réception (23) réalisent pour une phase (U, V, W) respectif un nombre 2·P de zones d'enroulement (20), et dans une zone d'enroulement (20) respective, les sections de branche (9) sont parcourues dans le même sens de courant par des conducteurs façonnés (8) réalisant la phase (U, V, W) lors de l'application d'une tension alternative à N phases à l'enroulement de stator (7), dans lequel 2·P ≥ 6, P étant un nombre naturel, dans lequel
- chaque zone d'enroulement (20) dans chacune des couches comprend un nombre q ≥ 2 d'emplacements de réception (23), q étant un nombre naturel,
**caractérisé en ce que**
dans un nombre A de couches doubles (22a) d'une zone d'enroulement (20) respective, les emplacements de réception (23) sont imbriqués avec une zone d'enroulement voisine (20) dans la direction circonférentielle d'un autre des phases (U, V, W) de telle sorte que les sections de branche (9) de l'autre phase (U, V, W) sont entourés dans la direction circonférentielle des deux côtés de deux sections de branche (9) disposées dans la couche double (22a) de la zone d'enroulement (20) respective, dans lequel 1 ≤ A ≤ (L/2)-1, A étant un nombre naturel.

2. Stator selon la revendication 1, dans lequel les emplacements de réception (23) sont imbriqués au moins à l'intérieur de la première ou de la (L/2)-ième couche double (22a).

3. Stator selon la revendication 1 ou 2, dans lequel la zone d'enroulement (20) respective s'étend à l'intérieur des [L/2)-A] couches doubles restantes (22b, 22c) respectivement sur exactement q encoches (6).

4. Stator selon la revendication 3, dans lequel
des première à (2·N·P·q)-ième encoches (6) sont prévues qui sont nommées selon l'ordre dans la direction circonférentielle, dans lequel pour l'un des phases (U, V, W)
- les emplacements de réception (23) à l'intérieur des couches doubles (22a) dans lesquelles les emplacements de réception (23) sont imbriqués se trouvent dans la (q+1)-ième encoche (6) et la (2·N·P·q)-ième encoche (6) ainsi que dans la (x·q·N)-ième encoche (6) et la [(x·q·N)+q+1]-ième encoche (6) pour tous les nombres naturels 1 ≤ x ≤ [(2·P)-1], et
- les emplacements de réception (23) à l'intérieur des [(L/2)-A] couches doubles (23b, 23c) dans lesquelles s'étend la zone d'enroulement (20) respective sur exactement q encoches (6) se trouvent dans les x-ième à (x+q-1)-ième encoches (6),
pour tous les nombres naturels 1 ≤ x ≤ [(2·P)-1].

5. Stator selon la revendication 4, dans lequel q ≥ 3, et pour la phase (U, V, W), les emplacements de réception (23) se trouvent à l'intérieur des couches doubles (23a) dans lesquelles sont imbriqués les emplacements de réception, y compris dans la deuxième à (q-1)-ième encoche (6) ainsi que dans la [(x·q·N)+2]-ième à [(x·q·N)+q-1]-ième encoche.

6. Stator selon l'une quelconque des revendications précédentes, dans lequel
une étendue axiale de sections de liaison (10) qui relient sur la face frontale (4) les sections de branche (9) disposées dans les emplacements de réception (23) imbriqués est inférieure à celle des sections de liaison (10) qui relient sur la face frontale les sections de branche disposées dans les emplacements de réception (23) des [(L/2)-A] couches doubles (22b, 22b) restantes.

7. Stator selon l'une quelconque des revendications précédentes, dans lequel
chaque phase (U, V, W) présente plusieurs trajets de courant (18a-c) qui présentent respectivement un montage en série de première à L-ième suites de conducteur (19a-f) composées de plusieurs sections de branche (9) connectées en série, dans lequel les suites de conducteurs (19a-f) sont nommées selon leur ordre le long du montage en série.

8. Stator selon la revendication 7, dans lequel les sections de branche (9) d'une suite de conducteurs (19a-f) respective sont disposées dans une seule couche double (22a-c), et les couches (21a-f) de la couche double (22a-c) changent le long du trajet de courant.

9. Stator selon la revendication 7 ou 8, dans lequel les première à (L/2)-ième suites de conducteurs (19a-c) s'étendent le long d'une première direction circonférentielle prédéfinie (25a) autour du noyau de stator (2), et les [(L/2)+1]-ième à L-ième suites de conducteurs (19d-f) s'étendent le long d'une deuxième direction circonférentielle (25b), opposée à la première direction circonférentielle (25a), autour du noyau de stator (2).

10. Stator selon la revendication 9, dans lequel les sections de branche (9) directement consécutives en ce qui concerne le montage en série de la (L/2)-ième suite de conducteurs (19c) et de la [L/2)+1]-ième suite de conducteurs (19d) sont disposées dans la même couche (21a), en particulier la première couche (21a) ou la L-ième couche (21f).

11. Stator selon l'une quelconque des revendications 7 à 10, dans lequel
chaque zone d'enroulement (20) est subdivisée en première à q-ième zones d'enroulement partielles (24a-c) qui s'étendent respectivement sur toutes les couches (21a-f) et sont nommées selon leur ordre dans la direction circonférentielle, chaque suite de conducteurs (19a-f) occupant toutes les zones d'enroulement partielles (24a-c) .

12. Stator selon la revendication 11, dans lequel chaque suite de conducteurs (19a-f) comprend des première à (2·P)-ième sections de branche (9) qui sont nommées selon leur ordre le long du montage en série, dans lequel
- pour les suites de conducteurs (19a, 19c, 19e) nommées par des nombres impairs, les [(j·2·P/q)+1]-ième à [(j+1)·2·P/q]-ième sections de branche (9) sont disposées dans les (j + 1) - ième zones d'enroulement partielles (24a-c) pour tous les nombres entiers 0 ≤ j ≤ (q-1), et/ou
- pour les suites de conducteurs (19b, 19d, 19f) nommées par des nombres pairs, les [(k·2·P/q)+1]-ième à [(k+1)·2·P/q]-ième sections de branche (9) sont disposés dans les (q-k)-ième zones d'enroulement partielles (24a-c) pour tous les nombres entiers 0 ≤ k ≤ (q-1).

13. Stator selon l'une quelconque des revendications 7 à 12, dans lequel
chaque trajet de courant (18a-c) présente une première section de branche extérieure (9) et une deuxième section de branche extérieure (9) qui sont réalisées par les sections de branche (9) extérieures par rapport au montage en série, dans lequel les sections de branche (9) extérieures de chaque trajet de courant (18a-c) sont disposées dans des zones d'enroulement (20) directement voisines pour la même phase (U, V, W), et les sections de branche (9) extérieures des trajets de courant (18a-c) d'une phase respectif (U, V, W) sont disposées dans des zones d'enroulement (20) respectivement différentes.

14. Machine électrique (101) présentant un stator (1) selon l'une quelconque des revendications précédentes ainsi qu'un rotor (102) monté rotatif par rapport au stator (1).

15. Véhicule (100), présentant une machine électrique (101) selon la revendication 14 qui est conçue pour entraîner le véhicule (100).
